# EUROPEAN PATENT SPECIFICATION

(11) **EP 0 658 781 B1**
(45) Date of publication and mention of the grant of the patent: **20.10.1999**
(21) Application number: 94119835.0
(22) Date of filing: 15.12.1994
(51) Int. Cl.: G02B 6/12, G02B 6/293

(54) **Resonant filter for wavelength division multiplexing optical communication systems**
Resonanz-Filter für optische Übertragungssysteme mit Wellenlängemultiplexierung
Filtre résonnant pour systèmes de communication optiques par multiplexage à longeur d'onde

(30) Priority: 16.12.1993 IT TO930958
(43) Date of publication of application: 21.06.1995
(73) Proprietor: CSELT Centro Studi e Laboratori Telecomunicazioni S.p.A., 10148 Turin (IT)
(72) Inventor: de Bernardi, Carlo, Torino (IT); Morasca, Salvatore, Como (IT); Pozzi, Fabio, Stradella (PV) (IT)
(74) Representative: Riederer Freiherr von Paar zu Schönau, Anton

(56) References cited:
- EP-A- 0 282 237
- JOURNAL OF LIGHTWAVE TECHNOLOGY, USA CHUNG Y ET AL: 'Analysis of a tunable multichannel two-mode-interference wavelength-division-multiplexer / demultiplexer' vol. 7, no. 5, May 1989, ISSN 0733-8724, pages 766 - 777
- IEEE PHOTONICS TECHNOLOGY LETTERS, vol. 4, no. 11, 1 November 1992 pages 1256-1258, XP 000328573 SENICHI SUZUKI ET AL 'INTEGRATED-OPTIC RING RESONATORS WITH TWO STACKED LAYERS OF SILICA WAVEGUIDE ON SI'
- JAPANESE JOURNAL OF APPLIED PHYSICS, vol. 31, no. 5B, 1 May 1992 pages 1628-1635, XP 000323129 HIDEAKI OKAYAMA ET AL 'TUNABLE FILTERS WITH EXTENDED TUNABILITY'
- ELECTRONICS LETTERS, vol. 28, no. 3, 30 January 1992 pages 326-327, XP 000305987 OKAMURA H ET AL 'ULTRAHIGH-FINESSE, BIDIRECTIONAL ER-DOPED FIBRE RING RESONATOR'

## Description

The present invention refers to components for optical communication systems and, more particularly, regards a resonant filter which can be implemented with integrated optics technology, to be used for example in a wavelength division multiplexing (WDM) communication system.

It is known that in WDM communication systems the number of channels which can actually be used is determined by the characteristics of the filters used for multiplexing and demultiplexing. It is also known that from this point of view good results have been obtained by using resonant cavity filters. In such filters the number of channels depends on the so-called "finesse" of the filter, namely, on the ratio between the free spectral range, i.e., the distance between two consecutive transmission peaks, and the peak bandwidth: the higher the finesse, the greater the number of channels that can be transmitted.

Wide free spectral ranges can be obtained by using very short resonant cavities. The simplest solution in order to obtain very short cavities would be using a rectilinear waveguide with end mirrors, that is, a structure of the Fabry-Perot type. However, a rectilinear cavity has a serious shortcoming, as all of the power outside the transmission band is reflected back to the sources, thereby disturbing the emission characteristics of same. For this reason, it would be better to use ring cavities, which form unidirectional resonant filters.

Examples of filters with resonant ring cavities are described by T. Kominato et al. in the paper "Ring Resonators Composed of GeO₂-Doped Silica Waveguides", Journal of Lightwave Technology, Vol. 10, No. 12, December 1992, and by K. Oda et al. in the paper "A Wide-Band Guided-Wave Periodic Multi/Demultiplexer with a Ring Resonator for Optical FDM Transmission Systems", Journal of Lightwave Technology, Vol. 6, No. 6, June 1988. However, the curvature radius of ring cavities cannot be reduced below a certain limit, usually a few millimeters, because otherwise curvature losses would be too high. Consequently, the free spectral range obtained is relatively limited (in the order of 10 GHz), and the device is relatively cumbersome.

In order to increase the free spectral range, the use has been proposed of a double ring resonant cavity, as described by K. Oda et al. in the paper "A Wide FSR Waveguide Double- Ring Resonator for Optical FDM Transmission Systems", Journal of Lightwave Technology, Vol. 9, No. 6, June 1991; anyway, a double ring system has higher losses and is still more cumbersome.

The purpose of the present invention is to provide a filter in which the shape of the resonant cavity is such as to result in a reduced size and a fair trade-off between the filter directionality (and consequently, the risk of disturbing the sources) and the free spectral range.

The filter according to the invention includes a resonant cavity, an input waveguide forming together with a first section of the cavity a directional coupler for transferring to the resonant cavity signals belonging to a WDM stream, and an output waveguide forming together with a second section of the cavity a directional coupler for extracting from the resonant cavity a radiation at a desired wavelength; the resonant cavity is formed by optical waveguides making up two facing Y-shaped couplers joined at the ends of the arms of the Y's; the waveguides making up such arms are single-mode waveguides forming said first and second single-mode sections of the resonant cavity, and the waveguides making up the legs of the Y's are two-mode waveguides made reflecting at their free ends and having such a length that a radiation at the desired wavelength entering one of the two two-mode sections from one of the single-mode sections passes from the same two- mode section, upon reflection at its end, to the other single-mode section of the cavity.

For greater clarity, reference is made to the enclosed drawings, in which:
- Figure 1 is a schematic view of the filter according to the invention; and
- Figure 2 is the representation of a known component for wavelength division systems taking advantage of two-mode interference.

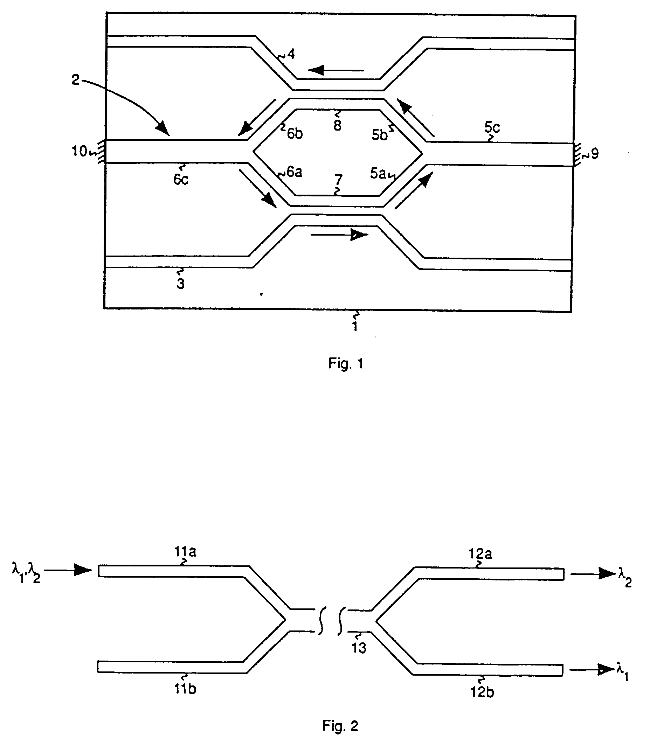

It appears from Figure 1 that the filter according to the invention is formed by a guiding structure made on a substrate 1 by means of any integrated optics technology. The filter comprises a resonant cavity 2, a waveguide 3 forming with a first section of the resonant cavity 2 a first directional coupler (input coupler) and a waveguide 4 forming with a second section of the resonant cavity 2 a second directional coupler (output coupler) for extracting the selected radiation. In order the filter can correctly operate, input and output couplers must have a low coupling factor for the wavelength of interest, because otherwise too high a fraction of the coupled power would leave the cavity without undergoing resonance and the filter selectivity would then be too low.

Resonant cavity 2 is made up by two facing Y-shaped couplers 5a, 5b, 5c and 6a, 6b, 6c, joined together at the free ends of the arms by sections 7, 8 which respectively face waveguides 3, 4 to form the directional couplers and which can be rectilinear or suitably curved, so as to achieve the required coupling characteristics to waveguides 3, 4. Arms 5a, 5b, 6a, 6b of each coupler and sections 7, 8 are single-mode waveguide sections, whereas legs 5c, 6c are two-mode waveguide sections whose free ends are associated to mirrors 9, 10 or are made reflecting in any appropriate way. By way of example, if the resonant cavity extends over the whole length of the substrate, the end faces of the latter may be made reflecting (for instance, metallized) in correspondence with the ends of guides 5c, 6c; otherwise, the end portion of guides 5c, 6c may comprise a Bragg grating or a mirror inserted in a groove or obtained by etching and so on. The length of the two-mode sections depends on the filter passband wavelength and must meet criteria that will be explained later on.

The filter uses the well known technique of two-mode interference, commonly used to make wavelength sensitive devices to be used in WDM systems, as described, for instance, by Y. Chung et al. in the paper "Analysis of a Tunable Multichannel Two-Mode-Interference Wavelength Division Multiplexer/Demultiplexer", Journal of Lightwave Technology, Vol. 7, No. 5, May 1989. In order to better explain the invention, a device as the one described in the above paper is shown in Figure 2 and its working principle as a wavelength demultiplexer is briefly summarized. The device comprises two single-mode input waveguides 11a, 11b and two single-mode output waveguides 12a, 12b connected to the opposite ends of a two-mode waveguide. Assuming that at the end of one of the input waveguides, for instance waveguide 11a, two wavelengths λ₁, λ₂ are present, by appropriately choosing the length L of the two-mode section, interference between the two modes can make wavelength λ₁ leave the two-mode waveguide at the input of waveguide 12b symmetrical to waveguide 11a, while wavelength λ₂ can be made to come out, for example, from waveguide 12a.

Coming back to the device in Figure 1, and in the light of the above explanation, each of the two-mode sections must have a length L1 such that a radiation at a wavelength λᵢ of interest passing from one of the single-mode sections to one of the two-mode sections, passes from the latter, upon reflection at the end mirror, to the second single-mode section. In particular, under such conditions, wavelength λᵢ of a WDM flow passing in waveguide 7 of the input coupler travels along the single-mode section 5a, travels along two-mode section 5c in both directions, passes into the second single-mode section 5b, 8, 6b, travels along the two-mode section 6c in both directions and re-enters the single-mode section 6a, thus restarting the cycle. The combination of waveguide sections 7, 5a, 5c, 5b, 8, 6b, 6c, 6a thus actually works as resonant cavity.

For simplicity the means for tuning the filter are not shown in the drawing, nor are the means for fine tuning of the two-mode sections and the coupling constants of the directional couplers. On the other hand, such means are at all conventional. Tuning means can be placed in one of the arms of each Y; fine-tuning means should obviously be placed in one of the two-mode sections and respectively of the two directional couplers.

It is clear that the configuration described for the resonant cavity eliminates the problems arising from the ring structure. In fact, the overall length of the structure is essentially determined by length L1 and by the aperture angle between the arms of the Y's, which determines the length of the oblique sections so that the spacing between the two single-mode sections is enough to avoid coupling between them. Overall transverse size is determined by the spacing between the two single-mode sections, which may reduce to a few tens of micrometers (the actual distance depends on the manufacture technology). It is therefore evident that a great number of filters as the one described can be made on a single substrate of practically available size. Moreover, with the structure described, a wide free spectral range is easily obtained.

In an exemplary practical embodiment of the filter on glass, to obtain a free spectral range of the order of 20 GHz, a cavity was required having an overall length of about 1 cm (corresponding to a filter geometric length of about 5 mm), while the width was kept below 100 µm; a corresponding ring filter, of the type described in the papers mentioned in the introduction of this description, would have a 1,5 mm radius, yet its curvature losses would be unacceptably high, while with the structure proposed herein losses would be limited to propagation losses only, which are very low.

It is evident that changes and modifications are possible without departing from the scope of the invention. For instance, resonant cavity 2 may be an active cavity, obtained in any conventional manner (e. g. in case of a filter manufactured on glass or LiNbO₃, by doping the guiding region by a rare earth, such as Er, and optically pumping the doped region; in case of a filter made of a semiconductor, such as InP or GaAs, by current injection into an appropriate guide section) and at least one of mirrors 9, 10 may be a dichroic mirror, reflecting the wavelength of interest and allowing injection of a pump radiation at a different wavelength. In this way the filter acts also as an amplifier. Obviously, the pump level must be such that no laser effect is originated in the cavity.

## Claims

1. Integrated optical filter, comprising: a resonant cavity (2); an input waveguide (3) forming together with a first section of the resonant cavity (2) a directional coupler for transferring to the resonant cavity signals from a wavelength division multiplexed stream; and an output waveguide (4) forming together with a second section of the resonant cavity (2) a directional coupler for extraction from the resonant cavity of a radiation at a desired wavelength, characterized in that said resonant cavity (2) is formed by optical waveguides (5a...5c, 6a...6c, 7, 8) which make up two facing Y-shaped couplers, joined at the ends of the arms (5a, 5b, 7, 6a, 6b, 8) of the Y's, and in that the waveguides (5a, 5b, 7, 6a, 6b, 8) making up such arms are single-mode waveguides forming said first and second sections of the resonant cavity which thus are single-mode sections, and the waveguide sections (5c, 6c) forming the legs of the Y's are two-mode waveguide sections, made reflecting at their free ends (9, 10) and having such a length that a radiation at the desired wavelength entering one of the two-mode sections (5c; 6c) from one of the single-mode sections (5a; 6b) passes from the same two-mode section, upon reflection at its end, to the other single-mode section (5b; 6a) of the cavity (2).

2. Integrated optical filter according to claim 1, characterized in that the optical waveguides (5a...5c, 6a...6c, 7, 8) forming the cavity (2) are active optical waveguides, and the reflecting end (9; 10) of at least one of the two-mode waveguide sections (5c, 6c) forms a dichroic mirror reflecting said desired wavelength an allowing injection into the cavity of a pump radiation.

## Patentansprüche

1. Integriertes optisches Filter, mit: einem Resonanzhohlraum (2); einem Eingangs-Wellenleiter (3), der zusammen mit einem ersten Abschnitt des Resonanzhohlraums (2) einen direktionalen Koppler zum Übertragen von Signalen aus einem Wellenlängenteilungs-multiplexierten Fluß zum Resonanzhohlraum bildet; und einem Ausgangs-Wellenleiter (4), der zusammen mit einem zweiten Abschnitt des Resonanzhohlraums (2) einen direktionalen Koppler zum Auskoppeln einer Strahlung einer gewünschten Wellenlänge aus dem Resonanzhohlraum bildet; dadurch gekennzeichnet, daß der Resonanzhohlraum (2) durch optische Wellenleiter (5a ... 5c, 6a ... 6c, 7, 8) gebildet ist, die zwei sich gegenüberliegende Y-förmige Koppler bilden, die an den Enden der Arme (5a, 5b, 7, 6a, 6b, 8) der Y miteinander verbunden sind, und daß die diese Arme bildenden Wellenleiter (5a, 5b, 7, 6a, 6b, 8) Einmode-Wellenleiter sind, die die ersten und zweiten Abschnitte des Resonanzhohlraums, die also Einmode-Abschnitte sind, bilden, und die den jeweiligen Fuß der Y darstellenden Wellenleiterabschnitte (5c, 6c) Zweimode-Wellenleiterabschnitte sind, die an ihren freien Enden (9, 10) reflektierend gemacht sind und so lang sind, daß eine Strahlung der gewünschten Wellenlänge, die in einen der Zweimode-Abschnitte (5c; 6c) aus einem der Einmode-Abschnitte (5a, 6b) eintritt, von diesem Zweimode-Abschnitt auf die Reflexion an dessen Ende hin zum anderen Einmode-Abschnitt (5b; 6a) des Hohlraums (2) übertritt.

2. Integriertes optisches Filter nach Anspruch 1, dadurch gekennzeichnet, daß die den Hohlraum (2) bildenden optischen Wellenleiter (5a ... 5c, 6a ... 6c, 7, 8) aktive optische Wellenleiter sind und das reflektierende Ende (9; 10) wenigstens eines der Zweimode-Wellenleiterabschnitte (5c, 6c) einen dichroitischen Spiegel bildet, der die gewünschte Wellenlänge reflektiert und die Injektion einer Pumpstrahlung in den Hohlraum ermöglicht.

## Revendications

1. Filtre optique intégré comprenant: une cavité résonnante (2); un guide d'onde d'entrée (3) qui forme avec un premier tronçon de la cavité résonnante (2) un coupleur directionnel pour transférer à la cavité résonnante des signaux prélevés d'un flux multiplexé en longueur d'onde; et un guide d'onde de sortie (4) qui forme avec un deuxième tronçon de la cavité résonnante (2) un coupleur directionnel pour l'extraction de la cavité résonnante d'un rayonnement à une longueur d'onde désirée, caractérisé en ce que ladite cavité résonnante (2) est réalisée au moyen de guides d'onde optiques (5a ... 5c, 6a ... 6c, 7, 8) qui forment deux coupleurs en Y placés l'un en face de l'autre et unis en correspondance des extrémités des bras (5a, 5b, 7, 6a, 6b, 8) des Y, et en ce que les guides d'onde (5a, 5b, 7, 6a, 6b, 8) qui constituent lesdits bras sont des guides d'ondes monomodes qui forment lesdits premier et deuxième tronçon de la cavité résonnante, qui sont partant des tronçons monomodes, et les tronçons de guide d'onde (5c, 6c) qui constituent les jambes des Y sont des tronçons de guide d'onde bimodes, rendus réfléchissants à l'extrémité libre (9, 10) et ayant une longueur telle que ledit rayonnement à la longueur d'onde désirée qui entre dans l'un des deux tronçons bimodes (5c; 6c) en provenance de l'un des tronçons monomodes (5a; 5b) passe de ce tronçon bimode, après réflexion à l'extrémité, à l'autre tronçon monomode (5b; 6a) de la cavité (2).

2. Filtre optique intégré selon la revendication 1, caractérisé en ce que les guides d'onde optiques (5a ... 5c, 6a ... 6c, 7, 8) qui constituent la cavité (2) sont des guides d'onde optiques actifs, et l'extrémité réfléchissante (9, 10) de l'un au moins des tronçons de guide d'onde bimodes (5c, 6c) forme un miroir dichroïque qui réfléchit ladite longueur d'onde désirée et permet l'injection dans la cavité d'un rayonnement de pompe.
